# FASCICULE DE BREVET EUROPEEN

(11) **EP 2 258 097 B1**
(45) Date de publication et mention de la délivrance du brevet: **07.02.2018**
(21) Numéro de dépôt: 09730691.4
(22) Date de dépôt: 23.03.2009
(51) Int. Cl.: H04L 12/18, H04L 12/58, H04L 29/08, H04L 29/06

(54) **ETABLISSEMENT D'UNE CONFERENCE AVEC UNE POLITIQUE DE MIXAGE DE FLUX DE COMMUNICATION**
EINRICHTUNG EINER KONFERENZ MIT EINER KOMMUNIKATIONSSTROM-MISCHUNGSRICHTLINIE
SETTING UP A CONFERENCE WITH A COMMUNICATION STREAM MIXING POLICY

(30) Priorité: 21.03.2008 FR 0851835
(43) Date de publication de la demande: 08.12.2010
(73) Titulaire: ALCATEL LUCENT, 92100 Boulogne-Billancourt (FR)
(72) Inventeur: REY, Jean-François, F-29228 Brest (FR); LITTEAUT, Jacques, F-78160 Marly Le Roy (FR); COULON, Stéphane, F-92707 Colombes (FR)
(74) Mandataire: Berthier, Karine
(86) Numéro de dépôt international: PCT/FR2009/050492
(87) Numéro de publication internationale: WO 2009/125116

(56) Documents cités:
- US-A1- 2007 250 569
- JOHNSTON AVAYA O LEVIN MICROSOFT CORPORATION A: "Session Initiation Protocol (SIP) Call Control - Conferencing for User Agents; rfc4579.txt" 1 août 2006 (2006-08-01), IETF STANDARD, INTERNET ENGINEERING TASK FORCE, IETF, CH , XP015055014 ISSN: 0000-0003 abrégé alinéa [05.8]
- MAHY AIRESPACE D PETRIE PINGTEL R: "The Session Initiation Protocol (SIP) Join Header; rfc3911.txt" IETF STANDARD, INTERNET ENGINEERING TASK FORCE, IETF, CH, 1 octobre 2004 (2004-10-01), XP015009684 ISSN: 0000-0003 cité dans la demande

## Description

La présente invention concerne un établissement d'une conférence multimédia entre au moins trois entités communicantes dans un réseau de paquets. Plus particulièrement, l'invention concerne le rattachement d'une entité communicante telle qu'un terminal ou un serveur à une communication déjà établie entre au moins deux autres entités communicantes.

Actuellement, un terminal peut joindre une communication déjà établie entre plusieurs autres terminaux, afin d'élargir la conférence lors de laquelle chaque terminal émet des données à chacun des autres terminaux et reçoit des données depuis chacun des autres terminaux. La communication multimédia peut consister à un échange de données telles que des flux vidéo, audio ou de messages instantanés dont rétablissement est réalisé via le protocole SIP.

Le document RFC 3911 décrit l'utilisation d'un en-tête "Join" dans un message de type "INVITE" pour qu'un terminal tiers puisse joindre une communication multimédia déjà établie entre au moins deux terminaux par l'utilisation du protocole de signalisation SIP {"Session Initiation Protocol" en anglais). L'en-tête "Join" contient des informations sur la communication SIP ("dialog" en anglais selon la terminologie SIP) déjà établie entre les deux terminaux.

Ce mécanisme crée une nouvelle conférence entre au moins les trois terminaux en utilisant une nouvelle adresse spécifique à la conférence. Par exemple, un terminal hôte mixe localement tous les flux de communication multimédias, génère et transmet une nouvelle adresse spécifique a la conférence aux autres terminaux afin que ces derniers sachent qu'une conférence a lieu et qu'ils peuvent optionellement demander des informations relatives à la conférence au terminal hôte en utilisant la nouvelle adresse comme référence. Selon un autre exemple, le terminal hôte transmet un message de type INVITE à un serveur de média et informe les autres terminaux de l'adresse du serveur de média afin que ces derniers se connectent au serveur de média qui mixe tous les flux de communication multimédias de la conférence établie entre les trois terminaux.

Ce mécanisme a pour inconvénient de créer une nouvelle conférence qui ne donne aucune possibilité au terminal hôte de mixer de manière restrictive des flux de communication multimédias émis et/ou reçus par le terminal tiers. Le terminal tiers ne peut pas joindre partiellement une communication multimédia déjà établie entre le terminal hôte et au moins un autre terminal. Par "partiellement", on entend une possibilité de restreindre des échanges de flux de communication entre le terminal tiers et au moins l'un des terminaux déjà en communication, par exemple dans le cas d'une communication unilatérale entre le terminal tiers et un autre terminal déjà en communication. Un flux de communication multimédia correspond à une transmission de données multimédias telles que des données vidéo ou audio entre deux terminaux.

Un objectif de l'invention est de remédier aux inconvénients précédents en établissant une conférence entre au moins trois entités communicantes à travers un réseau de paquets par le rattachement d'une entité communicante à une communication déjà établie entre au moins deux autres entités communicantes de sorte que l'entité communicante rattachée puisse bénéficier d'une politique de mixage de flux émis et reçus par l'entité communicante rattachée.

Pour atteindra cet objectif, un procédé selon l'invention pour accéder depuis une entité communicante tierce à une communication gérée par une entité communicante hôte et établie entre l'entité communicante hôte et au moins une entité communicante participante via un réseau de paquets, est caractérisé en ce qu'il comprend les étapes suivantes :
une transmission d'un message depuis l'entité communicante tierce à l'entité communicante hôte, le message comprenant au moins un paramètre associé à un identificateur d'une entité communicante participante, et
une application d'une politique restrictive de mixage de flux de communication échangés entre l'entité communicante participante dont l'identificateur est associé au paramètre et l'entité communicante tierce, ladite politique étant déterminée par le paramètre et l'identificateur associé au parametre.

Avantageusement, le message fournit une indication à la première entité communicante gérant les flux de la communication pour sélectionner des flux échangés entre les entités communicantes. La politique restrictive de mixage permet à l'entité communicante tierce de joindre partiellement la communication déjà existante afin que l'entité communicante tierce ne reçoive qu'une partie des flux émis par les autres entités communicantes et/ou que certaines entités communicantes ne reçoivent pas de flux émis par l'entité communicante tierce.

Selon une caractéristique de l'invention, le paramètre associé à l'identificateur de l'entité communicante participante peut correspondre à une politique restrictive de mixage de flux de communication selon laquelle aucun flux de communication émis par l'entité communicante participe n'est reçu par l'entité communicante tierce.

Selon une autre caractéristique de l'invention, le paramètre associé à l'identificateur de l'entité communicante participante peut correspondre à une politique restrictive de mixage de flux de communication selon laquelle aucun flux de communication émis par l'entité communicante tierce n'est reçu par l'entité communicante participante.

Selon une autre caractéristique de l'invention, le paramètre associé à l'identificateur de l'entité communicante participante peut correspondre à une politique restrictive de mixage de flux de communication selon laquelle aucun flux de communication émis par l'entité communicante participante n'est reçu par l'entité communicante tierce et aucun flux de communication émis par l'entité communicante tierce n'est reçu par l'entité communicante participante.

Selon une autre caractéristique de l'invention, les flux de communication échangés lors de la conférence peuvent être conformes au protocole SIP.

Selon d'autres caractéristiques de l'invention, le message peut être un message de type "INVITE" conforme au protocole SIP; et le paramètre peut être inclus dans un en-tête du type "Join" dans ledit message.

Selon une autre caractéristique de l'invention, l'entité communicante participante dont l'identificateur est associé audit paramètre peut être l'entité communicante hôte. La politique restrictive peut être utilisée dans ce cas pour les échanges de flux entre l'entité souhaitant accéder à la communication et l'entité hôte gérant la communication.

L'invention concerne également une entité communicante tierce destinée à accéder à une communication gérée par une entité communicante hôte et établie entre l'entité communicante hôte et au moins une entité communicante participante via un réseau de paquets, caractérisée en ce qu'elle comprend des moyens pour transmettre un message à l'entité communicante hôte, le message comprenant au moins un paramètre associé à un identificateur d'une entité communicante participante, et ledit paramètre et l'identificateur associé au paramètre déterminant une politique restrictive de mixage de flux de communication échangés entre l'entité communicante participante dont l'identificateur est associé au paramètre et l'entité communicante tierce, ladite politique étant appliquée par l'entité communicante hôte. L'entité communicante qui émet ce message inclut un module logiciel qui est un agent d'utilisateur client selon la terminologie SIP.

L'invention concerne aussi une entité communicante hôte en communication avec au moins une entité communicante participante et destinée à gérer un accès à ladite communication depuis une entité communicante tierce via un réseau de paquets, caractérisée en ce qu'elle comprend des moyens pour recevoir un message transmis par l'entité communicante tierce, le message comprenant au moins un paramètre associé à un identificateur d'une entité communicante participante, et des moyens pour appliquer une politique restrictive de mixage de flux de communication échangés entre l'entité communicante participante dont l'identificateur est associé au paramètre et l'entité communicante tierce, ladite politique étant déterminée par le paramètre et identificateur associé au paramètre. L'entité communicante qui reçoit le message inclut un module logiciel qui est un agent d'utilisateur serveur selon la terminologie SIP.

Les agents d'utilisateur client et serveur sont respectivement indus dans des entités communicantes du système de communication selon l'invention.

L'entité communicante pour gérer un accès à une communication et l'entité communicante souhaitant accéder à une communication peuvent être chacune incluses dans un serveur de média ou dans un terminal

L'invention concerne encore un système pour gérer un accès à une communication établie entre une entité communicante hôte et au moins une entité communicante participante depuis une entité communicante tierce via un réseau de paquets, caractérisé en ce qu'il comprend des moyens pour transmettre un message depuis l'entité communicante tierce à l'entité communicante hôte, le message comprenant au moins un paramètre associé à un identificateur d'une entité communicante participante, et des moyens pour appliquer une politique restrictive de mixage de flux de communication échangés entre l'entité communicante participante dont l'identificateur est associé au paramètre et l'entité communicante tierce, ladite politique étant déterminée par le paramètre et l'identificateur associé au paramètre.

La présente invention et les avantages qu'elle procure seront mieux compris au vu de la description ci-après faite en référence aux figures annexées, dans lesquelles :
- la figure 1 est un bloc-diagramme schématique d'un système de communication pour établir une conférence multimédia entre au moins trois entités communicantes à travers un réseau de paquets selon l'invention ; et
- la figure 2 est un algorithme d'un procédé pour établir une conférence multimédia entre au moins trois entités communicantes à travers un réseau de paquets selon l'invention.

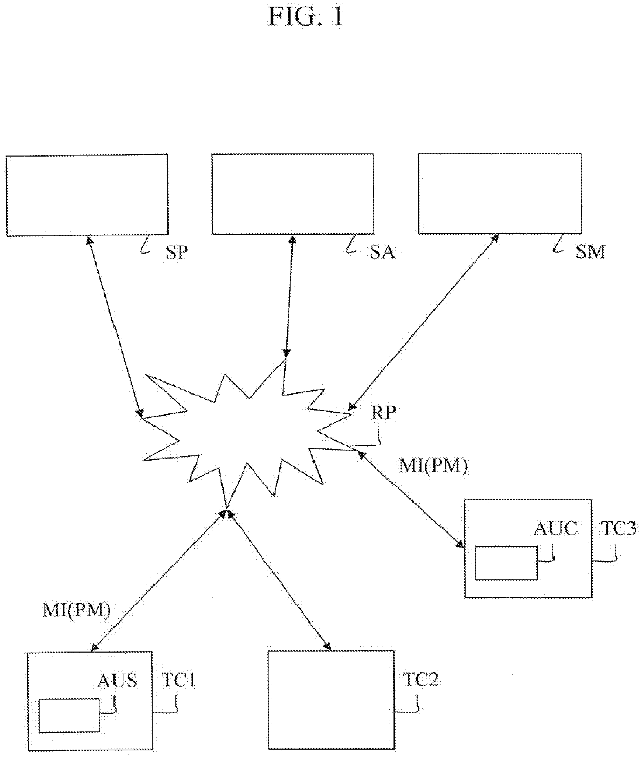

En référence à la figure 1, un système de communication selon l'invention comprend un réseau de paquets RP et au moins trois entités communicantes aptes à communiquer entre elles, dont deux entités communicantes sont aptes à établir une communication entre elles et une entité communicante tierce est apte à joindre la communication, Une entité communicante peut être constituée par ou incluse dans un terminal ou un serveur.

De manière générale, on entend par "communication" une communication bipartite, c'est-à-dire un dialogue entre deux entités communicantes, ou une conférence à laquelle participe aux moins trois entités communicantes. Une entité communicante tierce peut joindre une communication déjà existante entre n entités communicantes participantes avec n ≥ 2, dont une entité communicante hôte qui gère ladite communication.

Pour joindre la communication, l'entité communicante tierce transmet un message d'invitation MI à l'entité communicante hôte, le message contenant au moins un paramètre de mixage PM associé au moins à l'une des entités participantes. Chaque paramètre de mixage PM peut être associé à une liste d'entités communicantes participantes et indique que chaque entité communicante participante associée au paramètre de mixage ne doit pas recevoir de données depuis l'entité communicante tierce et/ou ne doit pas émettre de données à l'entité communicante tierce. L'entité communicante participante associée au paramètre de mixage peut être confondue avec l'entité communicante hôte ayant reçu le message d'invitation.

Selon une réalisation de l'invention, le message d'invitation MI est de type INVITE et le paramètre de mixage PM est inclus dans un champ de l'en-tête "Join" du message INVITE selon la norme définie dans le document RFC 3911. Selon une autre réalisation, le message d'invitation MI est de type INVITE et !e paramètre de mixage est inclus dans un champ externe à l'en-téte "Join" du message INVITE

L'en-tête "Join" contient des informations sur une communication SIP ("dialog" en anglais selon la terminologie SIP) déjà établie entre l'entité communicante hôte et une entité communicante participante, les informations contenant par exemple un identificateur du "dialog" associé à un champ appelé "call-id", un identificateur de l'entité communicante hôte associé à un champ appelé "to-tag" et un identificateur de l'entité communicante participante associé à un champ appelé "from-tag". L'identificateur "from-tag" désigne l'entité ayant demandé un "dialog" et l'identificateur "to-tag" désigne l'entité ayant accepté une invitation à un "dialog".

Dans la figure 1, deux entités communicantes sont à titre d'exemple un premier terminal TC1 et un deuxième terminal TC2 aptes à communiquer entre eux et l'entité communicante tierce est un troisième terminal TC3 apte à communiquer avec les premier et deuxième terminaux. De manière optionnelle, un système de communication comprend en outre, un serveur proxy SP, un serveur d'application SA et un serveur de média SM. Les serveurs proxy SP, d'application SA et de média SM sont inclus dans le réseau de paquets RP.

Le réseau de paquets RP est un réseau à haut débit de type IP ("Internet Protocol" en anglais), tel que l'internet ou un intranet ou encore un réseau privé spécifique à une société. Par exemple, chacun des terminaux TC1, TC2 et TC3 peut être un ordinateur personnel ou un terminal intelligent pouvant communiquer avec le réseau de paquets par une liaison filaire ou sans fil.

Il est considéré que les premier et deuxième terminaux TC1 et TC2 sont aptes à communiquer entre eux à travers le réseau de paquets RP selon une communication conforme au protocole SIP. Par exemple, la communication entre les terminaux correspond à un échange de flux multimédias relatifs à des contenus audio et/ou des contenus vidéo, ou à des messages instantanés.

Selon un exemple, les utilisateurs des premier, deuxième et troisième terminaux sont respectivement un vendeur, un client et un assistant du vendeur. Le vendeur souhaite dans un premier temps qu'une communication soit établie avec le client, puis dans un deuxième temps que l'assistant du vendeur rejoigne la communication avec une politique restrictive de mixage de flux multimédias. Cette politique autorise par exemple l'assistant à être en écoute de la communication sans que le client ne reçoive de flux multimédia venant de l'assistant.

Dans un premier temps, le premier terminal TC1 établit une communication avec le deuxième terminal TC2 par l'intermédiaire du serveur proxy SP. Lors de sa mise sous tension, chaque terminal TC1, TC2 est enregistré auprès du serveur proxy SP qui assigne une adresse par exemple de type URI {"Uniform Resource Identifier" en anglais) au terminal. L'adresse URI permet au terminal d'être identifié dans le réseau de paquets RP. Le premier terminal transmet un message SIP au serveur proxy qui peut router ce message SIP vers le deuxième terminal afin d'établir une communication "dialog" entre les premier et deuxième terminaux. A cette fin, le serveur proxy corrèle par exemple le contenu du message SIP reçu avec l'adresse URI du deuxième terminal.

Le serveur proxy SP peut avoir pour fonctionnalité de lister des "dialogs" établis dans le réseau de paquets. Par exemple, lorsqu'un "dialog" est établi entre les premier et deuxième terminaux, le serveur proxy mémorise des informations sur le "dialog" telles qu'un champ "call-id" renseigné par un identificateur du "dialog". un champ "from-tag" renseigné par un identificateur du premier terminal, un champ "to-tag" renseigné par un identificateur du deuxième terminal et un champ "Contact" pourvu d'un paramètre qui indique si une conférence a lieu et qui identifie l'entité hébergeant la conférence. En particulier, une entité communicante souhaitant se joindre à une conférence en cours peut récupérer par exemple auprès du serveur proxy l'adresse de l'entité communicante hébergeant la conférence en cours.

Dans une variante, l'un des premier et deuxième terminaux participant au "dialog" peut avoir la fonctionnalité de lister les "dialogs" qu'il établit avec des tiers.

Dans une autre variante, le premier terminal TC1 établit une communication avec le deuxième terminal TC2 sans l'intermédiaire du serveur proxy SP, si le premier terminal possède l'adresse URI du deuxième terminal. Par exemple, dans un réseau interne privé d'entreprise, chaque terminal peut connaître l'adresse URI d'autres terminaux,

Dans un deuxième temps, le troisième terminal TC3 transmet un message d'invitation MI au premier terminal TC1 pour que ce dernier crée une conférence entre les trois terminaux TC1, TC2 et TC3 avec une politique restrictive de mixage des flux multimédias définie dans le message MI, selon le procédé de l'invention décrit ci-après. En particulier, le message d'invitation contient des paramètres de mixage PM relatifs à la communication établie par le terminal TC1 et indiquant les échanges de flux autorisés. Le terminal TC1 ayant reçu le message d'invitation mixe les échanges de flux avec les deuxième et troisième terminaux et détermine le statut de chaque flux par rapport au terminal TC3 ayant émis le message d'invitation.

Selon un autre exemple impliquant d'autres entités illustrées dans la figure 1, le serveur d'application SA implémente une logique de contrôle qui asservit les opérations du serveur de média SM. Par exemple, le serveur d'application est à l'écoute de communications établies entre des terminaux à travers le réseau de paquets et commande le serveur de média pour que ce dernier interagisse avec au moins l'un desdits terminaux,

Le serveur de média SM délivre des flux muitimédias à des terminaux. En particulier, le serveur de média peut servir de pont pour une conférence multimédia entre plusieurs terminaux.

Les serveurs SM et SA peuvent être inclus dans un même et unique serveur. Par exemple, les serveurs SM et SA peuvent être inclus dans un serveur de supervision qui surveille des communications entre des terminaux et qui retranscrit certaines données échangées entre ces terminaux. Ce serveur de supervision détecte toute communication établie entre deux terminaux spécifiques désignés par des adresses URI connues du serveur de supervision et mémorise tous les flux de données audio échangés entre les deux terminaux. Le serveur de supervision joue alors le rôle d'entité communicante effectuant la politique de mixage. Comme dans l'example précédent, un troisième terminal TC3 souhaitant accéder à la communication hébergée dans le serveur de supervision entre au moins les terminaux TC1 et TC2, envoie un message d'invitation MI contenant un paramètre de mixage PM au serveur de supervision.

Selon l'invention, le message d'invitation MI est transmis depuis un agent d'utilisateur client UAC à un agent d'utilisateur serveur UAS et inclut au moins un paramètre de mixage PM. L'agent d'utilisateur client UAC est inclus dans une entité communicante tierce souhaitant accéder à une communication déjà existante entre des entités communicantes participantes, et l'agent d'utilisateur serveur UAS est inclus dans une entité communicante hôte, parmi les entités communicantes participantes, qui gère ladite communication déjà existante. Un paramètre de mixage est par exemple l'un des paramètres de type "recvonly", "sendonly" et "inactive".

De manière générale, l'agent d'utilisateur serveur UAS est inclus dans une entité communicante qui peut être un terminal ou un serveur du type serveur de média et qui est en communication bipartite de type "dialog" ou en conférence avec des terminaux. En outre, l'agent d'utilisateur client UAC est inclus dans une entité communicante qui peut être un terminal ou un serveur, par exemple du type serveur de média, et qui est destinée à rejoindre un "dialog" existant ou une conférence existante entre des terminaux et éventuellement au moins un serveur.

Selon l'exemple illustré à la figure 1, ragent d'utilisateur client UAC est inclus dans le troisième terminal TC3 et l'agent d'utilisateur serveur UAS est inclus dans le premier terminal TC1.

Selon l'invention, l'agent d'utilisateur client UAC peut envoyer un message d'invitation MI à l'agent d'utilisateur serveur UAS afin de joindre un "dialog" dont les échanges de flux multimédias sont mixés par l'agent d'utilisateur serveur UAS. L'agent d'utilisateur client UAC peut associer un ou plusieurs identificateurs d'entité communicante à chaque paramètre de mixage PM dans le message d'invitation MI. De préférence, un même identificateur d'entité communicante n'est pas associé à plusieurs paramètres de mixage PM. Par ailleurs, ragent d'utilisateur client UAC peut associer un paramètre de mixage PM à un identificateur d'une entité communicante qui ne participe pas au "dialog" identifié dans le message d'invitation MI, mais qui participe à la conférence.

L'agent d'utilisateur serveur UAS reçoit un message d'invitation MI et adopte une politique restrictive de mixage de flux multimédias en fonction du ou des paramètres de mixage inclus dans le message MI. Plus particulièrement, ladite politique restrictive est déterminée par chaque paramètre de mixage inclus dans le message MI et chaque identificateur d'entité communicante associé au paramètre. En d'autres termes, un paramètre peut être dit "renseigné par" ou "ayant pour valeur" un identificateur d'entité communicante.

Une politique restrictive de mixage de flux multimédias est différente d'une politique classique de mixage de flux multimédias en ce qu'elle restreint des échanges de flux entre l'entité communicante tierce ayant rejoint une communication déjà existante entre des entités communicantes participantes et une ou plusieurs entités communicantes participantes. L'entité communicante tierce ne reçoit pas de flux depuis au moins une entité communicante participante et/ou en ce qu'au moins une entité communicante participante ne reçoit pas de flux depuis l'entité communicante tierce.

Si le message MI contient un paramètre de type "recvonly" associé à un identificateur d'une entité communicante participante, l'agent d'utilisateur serveur UAS exécute une politique de mixage de sorte que les flux multimédias transmis à l'entité communicante participante ne prennent pas en compte les flux générés par ragent d'utilisateur client UAC. Par conséquent, aucun flux provenant de l'agent client UAC n'est transmis à l'entité communicante participante qui est associée au paramètre de type "recvonly" dans le message MI.

Si le message MI contient un paramètre de type "sendonly" associé à un identificateur d'une entité communicante participante, ragent d'utilisateur serveur UAS exécute une politique de mixage de sorte que les flux multimédias émis par l'entité communicante participante ne soient pas reçus par ragent d'utilisateur client UAC. Par conséquent, l'agent client UAC ne reçoit aucun flux depuis l'entité communicante participante qui est associée au paramètre de type "sendonly" dans le message MI.

Si le message MI contient un paramètre de type "inactive" associé à un identificateur d'une entité communicante participante, ragent d'utilisateur serveur UAS exécute une politique de mixage de sorte que les flux multimédias transmis à l'entité communicante participante ne prennent pas en compte les flux générés par l'agent d'utilisateur client UAC et les flux multimédias émis par l'entité communicante participante ne soient pas reçus par ragent d'utilisateur client UAC. Par conséquent, l'agent client UAC n'échange aucun flux avec l'entité communicante participante qui est associé au paramètre de type "inactive" dans le message MI.

Les dénominations "recvonly", "sendonly" et "inactive" définissant les types de paramètres de mixage PM sont donnés à titre d'exemples non limitatifs pour une politique de mixage de flux échangés entre l'entité communicante tierse incluant l'agent d'utilisateur client UAC et l'entité communicante participante associée à un paramètre de mixage du point de vue de l'agent d'utilisateur client UAC.

Des restrictions peuvent être appliquées à la politique de mixage pour éviter des événements non souhaités, tels qu'une divulgation de données confidentielles. Par exemple, un champ d'option SIP ("SIP option tag" en anglais) peut être inclus dans le message d'invitation MI et interprété par un agent d'utilisateur serveur UAS qui n'implémente pas l'invention de manière à ce que ce dernier puisse rejeter le message afin qu'il exécute un mixage classique de flux tel que défini par le document RFC 3911 en ignorant le ou les paramètres de mixage PM indus dans le message MI.

Selon l'invention, l'agent d'utilisateur serveur UAS, qui reçoit le message d'invitation MI, peut toujours décliner l'invitation transmise par ragent d'utilisateur serveur UAC.

De manière générale, le message d'invitation MI est un message qui utilise le protocole SIP et qui corrèle des informations sur au moins un "diaiog" déjà établi entre deux entités communicantes participantes. Ces informations sont utilisées par l'agent d'utilisateur serveur UAS pour déterminer le contexte du "dialog" identifié, de manière à considérer toutes les entités communicantes participantes qui sont en communication avec l'entité communicante incluant l'agent UAS. Chaque identificateur d'entité communicante participante associé à un paramètre de mixage PM dans le message MI permet alors à l'agent UAS d'identifier l'entité communicante à laquelle une politique restrictive de mixage des flux est à appliquer.

Selon une réalisation de l'invention, le message MI est de type INVITE contenant un en-tête "Join" selon la norme définie dans le document RFC 3911. Les informations sur au moins un "dialog" déjà établi entre deux entités communicantes sont alors incluses dans l'en-tête "Join".

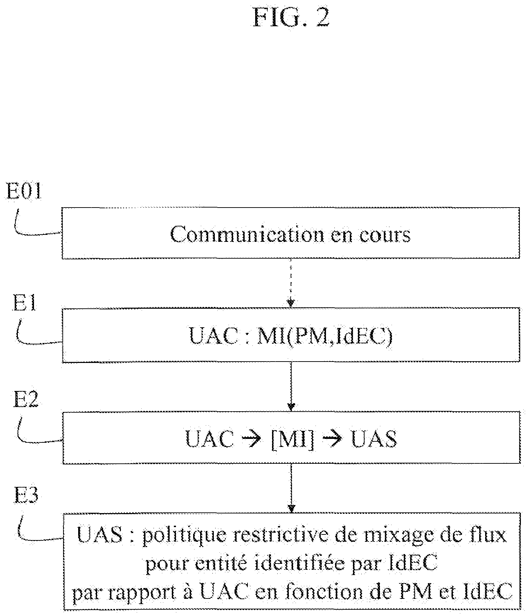

En référence à la figure 2, le procédé d'établissement de conférence selon une réalisation de l'invention comprend des étapes E1 à E3 exécutées automatiquement dans le système de communication selon l'invention,

A une étape préliminaire E01 est établie une communication à laquelle participe un ensemble d'entités communicantes participantes, comprenant au moins deux entités communicantes participantes. Il est considéré qu'une entité communicante hôte parmi les entités communicantes participantes gère la communication qui peut être un simple dialogue entre deux entités ou une conférence entre au moins trois entités.

Par exemple, la communication est établie par un agent d'utilisateur serveur UAS inclus dans un premier terminal TC1 avec un deuxième terminal TC2.

Selon un autre exemple, des premier, deuxième et troisième terminaux TC1, TC2 et TC3 sont en conférence par l'intermédiaire d'un serveur de média SM qui mixe les flux multimédias échangés entre les trois terminaux.

A l'étape E1, un agent d'utilisateur client UAC inclus dans une entité communicante tierce génère un message d'invitation MI destiné à être transmis à l'agent d'utilisateur serveur UAS inclus dans l'entité communicante hôte gérant la communication établie à l'étape préliminaire E01, par exemple le premier terminal TC1, Le message d'invitation MI est une requête qui peut être interprétée et acceptée par l'agent d'utilisateur serveur UAS afin que l'entité communicante tierce puisse participer à une conférence multimédia hébergée par l'entité hôte incluant l'agent d'utilisateur serveur UAS.

Le message d'invitation MI contient au moins un paramètre de mixage PM associé à au moins un identificateur IdEC d'une entité communicante participant à la communication multimédia. Chaque paramètre de mixage PM indique à l'agent d'utilisateur serveur UAS la politique de mixage des flux à appliquer à l'entité communicante participante dont l'identificateur IdEC est associé au paramètre PM.

Le message d'invitation MI contient un unique paramètre de mixage PM de chaque type "recvonly", "sendonly" ou "inactive" qui peut être associé à un seul identificateur d'une entité communicante participante ou à plusieurs identificateurs d'entité communicante participante, c'est-à-dire à plusieurs entités communicantes participantes distinctes.

En variante, le message d'invitation MI peut contenir plusieurs paramètres de mixage PM du même type "recvonly", "sendonly" ou "inactive" qui sont respectivement associés à plusieurs identificateurs IdEC d'entité communicante participante, c'est-à-dire' à plusieurs entités communicantes participantes distinctes.

Par exemple, l'agent d'utilisateur client UAC a été connecté à un serveur proxy pour obtenir des informations sur la communication déjà établie dont notamment un identificateur d'un "diaiog" utilisé dans cette communication et un identificateur de l'entité communicante qui participe à cette communication et à laquelle la politique de mixage des flux est à appliquer.

A l'étape E2, l'agent d'utilisateur client UAC inclus dans l'entité communicante tierce transmet le message d'invitation généré MI à l'agent d'utilisateur serveur UAS inclus dans l'entité communicante hôte gérant la communication.

Par exemple, le message d'invitation MI est transmis depuis l'agent d'utilisateur client UAC à l'agent d'utilisateur serveur UAS via un serveur proxy.

A l'étape E3, l'agent d'utilisateur serveur UAS reçoit et analyse le message d'invitation MI transmis par l'agent d'utilisateur client UAC.

Si les informations sur la communication multimédia en cours contenues dans le message d'invitation MI sont valides, l'agent d'utilisateur serveur UAS accepte l'entité communicante tierce incluant l'agent d'utilisateur client UAC dans la communication multimédia.

Si la communication est initialement une communication bipartite, alors l'acceptation de l'entité communicante tierce crée une conférence entre trois entités. Si la communication est initialement une conférence, alors l'acceptation de l'entité communicante tierce correspond à un ajout de participant dans la conférence.

En particulier, l'agent d'utilisateur serveur UAS identifie chaque entité communicante participante dont l'identificateur est associé à un paramètre PM et applique à chaque entité communicante identifiée une politique restrictive de mixage des flux de communication échangés entre l'entité communicante tierce incluant l'agent d'utilisateur client UAC et l'entité communicante identifiée en fonction de l'identificateur IdEC associé au paramètre PM. Le paramètre PM "recvonly", "sendonly" ou "inactive" et l'identificateur d'entité communicante participante associé au paramètre déterminent ladite politique restrictive.

Selon un premier exemple, un premier terminal sert de pont à une conférence multimédia à laquelle participe un ensemble d'entités communicantes participantes comprenant le premier terminal, un deuxième terminal et un troisième terminal. Les premier, deuxième et troisième terminaux sont respectivement utilisés par "Alice", "Bob" et "Charles". Il est considéré que le terminal utilisé par "Alice" est une entité communicante hôte gérant la conférence.

Un premier "dialog" est initialement établi entre "Alice" et "Bob" et un serveur proxy mémorise des informations sur le premier "diaiog" qui sont un champ "call-id" associé à un identificateur de premier "dialog" renseigné par "A-B@B", un champ "to-tag" associé à un identificateur du premier terminal renseigné par "1234467" et un champ "from-tag" associé à un identificateur du deuxième terminal renseigné par "AB23". Un deuxième "dialog" est ensuite établi entre "Alice" et "Charles" et un serveur proxy mémorise des informations sur le deuxième "dialog" qui sont un champ "call-id" associé à un identificateur de deuxième "dialog" renseigné par "A-C@C", un champ "to-tag" associé à un autre identificateur du premier terminal renseigné par "RT45" et un champ "from-tag" associé à un identificateur du troisième terminal renseigné par "UI66".

Une entité communicante tierce est un quatrième terminal utilisé par "Daniel" qui souhaite se joindre à la conférence. L'entité communicante tierce génère un message d'invitation contenant un paramètre "recvonly" associé à "Charles" afin de restreindre la politique de mixage de flux échangés entre le quatrième terminal utilisé par "Daniel" et le troisième terminal utilisé par "Charles" de sorte que "Daniel" puisse recevoir tous les flux émis par "Charles" sans que "Charles" ne reçoive de flux émis par "Daniel".

Le message d'invitation transmis par l'entité communicante tierce utilisée par "Daniel" à l'entité communicante hôte hébergeant la conférence et utilisée par "Alice" est de la forme suivante :
"INVITE Alice
From: Daniel
To: Alice
call-id: jjjjjd234@D
Join: A-B@B ; to-tag=1234467 ; from-tag=AB23 ; recvonly=UI66".

Si l'entité communicante hôte utilisée par "Alice" ne peut plus assurer l'hébergement de la conférence multimédia en raison du nombre élevé de participants, cette entité peut récupérer l'adresse d'un serveur de mèdia et transmettre cette adresse à l'entité communicante tierce, ainsi qu'aux autres entités participant à la conférence. Le serveur de média, auquel chaque entité participant à la conférence précédente peut se connecter, assure l'hébergement de la conférence multimédia en cours. L'entité communicante tierce peut alors transmettre un nouveau message d'invitation au serveur de média pour que ce dernier applique une politique de mixage de flux restrictive.

Selon un deuxième exemple, deux entités communicantes qui sont respectivement un premier terminal et un deuxième terminal sont en communication. Les premier et deuxième terminaux sont respectivement utilisés par "Alice" et "Bob", Il est considéré que le terminal utilisé par "Alice" est une entité communicante hôte gérant la communication.

Un serveur proxy mémorise des informations sur le "dialog" établi entre "Alice" et "Bob" qui sont un champ "call-id" associé à un identificateur de "dialog" renseigné par "A-B@B", un champ "to-tag" associé à un identificateur du premier terminal renseigné par "12345" et un champ "from-tag" associé à un identificateur du deuxième terminal renseigné par "54321".

Un troisième terminal utilisé par "Charles" interroge le serveur proxy pour router un simple appel vers le premier terminal, "Charles" n'ayant pas connaissance de la conférence entre "Alice" et "Bob". Un serveur d'application qui est à l'écoute de communications dans le réseau de paquets intercepte l'appel de "Charles" et commande une entité communicante tierce constituée par un serveur de média pour que cette dernière génère et transmette un message d'invitation à l'entitè communicante hôte utilisée par "Alice".

L'entité communicante tierce génère le message d'invitation contenant un paramètre "inactive" associé à "Bob" afin de restreindre la politique de mixage de flux échangés entre l'entité communicante tierce constituée par le serveur de média et le deuxième terminal utilisé par "Bob" de sorte que "Alice" puisse communiquer avec le serveur de média sans que "Bob" puisse échanger des flux multimédia avec le serveur de média. Par exemple, le serveur de média envoie à "Alice" un flux contenant la question "Chades vous appelle, pressez "1" pour accepter l'appel" sans que "Bob" n'entende la question.

Le message d'invitation transmis automatiquement par l'entité communicante tierce constituée par le serveur de média à l'entité communicante hôte utilisée par "Alice" est de la forme suivante :
"INVITE Alice
From: serveur de média
To: Alice
call-id: 15423@SM
Join: A-B@B ; to-tag=12345 ; from-tag=54321 ; inactive=54321".

Selon un troisième exemple, deux entités communicantes qui sont respectivement un premier terminal et un deuxième terminal sont en communication. Les premier et deuxième terminaux sont respectivement utilisés "Alice" et "Bob", Il est considéré que le terminal utilisé par "Alice" est une entité communicante hôte gérant la communication.

Un serveur proxy mémorise des informations sur le "dialog" établi entre "Alice" et "Bob" qui sont un champ "call-id" associé à un identificateur de "dialog" renseigné par "A-B@B", un champ "to-tag" associé à un identificateur du premier terminal renseigné par "12345" et un champ "from-tag" associé à un identificateur du deuxième terminal renseigné par "54321".

Un serveur de supervision est à l'écoute de communications dans le réseau de paquets. Dès que le "dialog" est établi entre "Alice" et "Bob", le serveur de supervision en est averti exemple au moyen du serveur proxy ayant mémorisé des informations sur le "diaiog", et génère un message d'invitation contenant un paramètre "recvonty" associé à "Alice" et à "Bob" afin de restreindre la politique de mixage de flux échangés entre une entité communicante tierce constituée par le serveur de supervision et les premier et deuxième terminaux utilisés par "Alice" et "Bob" de sorte que le serveur de supervision puisse recevoir tous les flux émis par "Alice" et "Bob" sans que ces derniers ne reçoivent de flux émis par le serveur de supervision. Par exemple, l'entité communicante hôte utilisée par "Alice" copie les flux relatifs à "Alice" et à "Bob" et les transmet à l'entité communicante supplémentaire constituée par le serveur de supervision, de sorte que le serveur de supervision puisse écouter toutes les conversations entre "Alice" et à "Bob" sans que ces derniers ne reçoivent de flux provenant de ce serveur.

Le message d'invitation transmis par l'entité communicante tierce constituée par le serveur de supervision à l'entité communicante hôte utilisée par "Alice" est de la forme suivante :
"INVITE Alice
From: serveur de supervision
To: Alice
call-id: 13254@SS
Join: A-B@B ; to-tag=12345 ; from-tag=54321 ; recvonly=12345, 54321".

## Revendications

1. Procédé pour accéder depuis une entité communicante tierce à une communication gérée par une entité communicante hôte et établie entre l'entité communicante hôte et au moins une entité communicante participante via un réseau de paquets (RP) comprenant les étapes suivantes :
une transmission (E2) d'un message (MI) depuis l'entité communicante tierce à l'entité communicante hôte, le message comprenant au moins un paramètre (PM) associé à un identificateur d'une entité communicante participante, et **caractérisé en ce qu'**il comprend :
une application (E3) d'une politique restrictive de mixage de flux de communication échangés entre l'entité communicante participante dont l'identificateur est associé au paramètre et l'entité communicante tierce, selon laquelle aucun flux de communication émis par l'entité communicante participante n'est reçu par l'entité communicante tierce et aucun flux de communication émis par l'entité communicante tierce n'est reçu par l'entité communicante participante, ladite politique étant déterminée par le paramètre et l'identificateur associé au paramètre.

2. Procédé conforme la revendication 1, selon lequel les flux de communication échangés lors de la communication sont conformes au protocole SIP.

3. Procédé conforme à l'une des revendications 1 et 2, selon lequel le message (MI) est un message de type "INVITE" conforme au protocole SIP.

4. Procédé conforme à la revendication 3, selon lequel le paramètre est inclus dans un en-tête du type "Join" dans ledit message (MI).

5. Procédé conforme à l'une des revendications 1 à 4, selon lequel l'entité communicante participante dont l'identificateur est associé audit paramètre est l'entité communicante hôte.

6. Entité communicante tierce destinée à accéder à une communication gérée par une entité communicante hôte et établie entre l'entité communicante hôte et au moins une entité communicante participante via un réseau de paquets (RP), comprenant des moyens (UAC) pour transmettre un message (MI) à l'entité communicante hôte, le message comprenant au moins un paramètre (PM) associé à un identificateur d'une entité communicante participante, et **caractérisé en ce que** ledit paramètre et l'identificateur associé au paramètre déterminant une politique restrictive de mixage de flux de communication échangés entre l'entité communicante participante dont l'identificateur est associé au paramètre et l'entité communicante tierce, politique selon laquelle aucun flux de communication émis par l'entité communicante participante n'est reçu par l'entité communicante tierce et aucun flux de communication émis par l'entité communicante tierce n'est reçu par l'entité communicante participante, ladite politique étant appliquée par l'entité communicante hôte.

7. Entité communicante hôte en communication avec au moins une entité communicante participante et destinée à gérer un accès à ladite communication depuis une entité communicante tierce via un réseau de paquets (RP) comprenant des moyens (UAS) pour recevoir un message (MI) transmis par l'entité communicante tierce, le message comprenant au moins un paramètre (PM) associé à un identificateur d'une entité communicante participante, et **caractérisée en ce qu'**elle comprend des moyens (UAS) pour appliquer une politique restrictive de mixage de flux de communication échangés entre l'entité communicante participante dont l'identificateur est associé au paramètre et l'entité communicante tierce, politique selon laquelle aucun flux de communication émis par l'entité communicante participante n'est reçu par l'entité communicante tierce et aucun flux de communication émis par l'entité communicante tierce n'est reçu par l'entité communicante participante, ladite politique étant déterminée par le paramètre et l'identificateur associé au paramètre.

8. Système pour gérer un accès à une communication établie entre une entité communicante hôte et au moins une entité communicante participante depuis une entité communicante tierce via un réseau paquets (RP) comprenant des moyens (UAC) pour transmettre un message (MI) depuis l'entité communicante tierce à l'entité communicante hôte, le message comprenant au moins un paramètre (PM) associé à un identificateur d'une entité communicante participante, et **caractérisé en ce qu'**il comprend des moyens (UAS) pour appliquer une politique restrictive de mixage de flux de communication échangés entre l'entité communicante participante dont l'identificateur est associé au paramètre et l'entité communicante tierce, politique selon laquelle aucun flux de communication émis par l'entité communicante participante n'est reçu par l'entité communicante tierce et aucun flux de communication émis par l'entité communicante tierce n'est reçu par l'entité communicante participante, ladite politique étant déterminée par le paramètre et l'identificateur associé au paramètre.

## Patentansprüche

1. Verfahren zum Zugreifen von einer dritten Kommunikationseinheit auf eine Kommunikation, die von einer Host-Kommunikationseinheit verwaltet wird und zwischen der Host-Kommunikationseinheit und mindestens einer teilnehmenden Kommunikationseinheit über ein Paketnetzwerk (RP) hergestellt wird, das die folgenden Schritte umfasst:
eine Übertragung (E2) einer Nachricht (MI) von der dritten Kommunikationseinheit an die Host-Kommunikationseinheit, wobei die Nachricht mindestens einen Parameter (PM) umfasst, der verbunden ist mit einem Identifizierer einer teilnehmenden Kommunikationseinheit, und
**dadurch gekennzeichnet, dass** es umfasst:
eine Anwendung (E3) einer restriktiven Politik des Mischens der Kommunikationsströme, die zwischen der teilnehmenden Kommunikationseinheit, deren Identifizierer mit dem Parameter verbunden ist, und der dritten Kommunikationseinheit ausgetauscht werden, wonach kein von der teilnehmenden Kommunikationseinheit ausgegebener Kommunikationsfluss von der dritten Kommunikationseinheit empfangen wird und kein von der dritten Kommunikationseinheit ausgegebener Kommunikationsfluss von der teilnehmenden Kommunikationseinheit empfangen wird, wobei besagte Politik bestimmt wird von dem Parameter und dem mit dem Parameter verbundenen Identifizierer.

2. Verfahren nach Anspruch 1, wonach die bei der Kommunikation ausgetauschten Kommunikationsflüsse dem SIP-Protokoll entsprechen.

3. Verfahren nach einem der Ansprüche 1 und 2, wonach die Nachricht (MI) eine "INVITE"-Nachricht gemäß dem SIP-Protokoll ist.

4. Verfahren nach Anspruch 3, wonach der Parameter in einem "Join"-Kopf in besagter Nachricht (MI) enthalten ist.

5. Verfahren nach einem der Ansprüche 1 bis 4, wonach die teilnehmende Kommunikationseinheit, deren Identifizierer mit besagtem Parameter verbunden ist, eine Host-Kommunikationseinheit ist.

6. Dritte Kommunikationseinheit zum Zugreifen auf eine Kommunikation, die von einer Host-Kommunikationseinheit verwaltet wird und zwischen der Host-Kommunikationseinheit und mindestens einer teilnehmenden Kommunikationseinheit über ein Paketnetzwerk (RP) hergestellt wird, umfassend die Mittel (UAC) zum Übertragen einer Nachricht (MI) an die Host-Kommunikationseinheit, wobei die Nachricht mindestens einen Parameter (PM) umfasst, der verbunden ist mit dem Identifizierer einer teilnehmenden Kommunikationseinheit, und **dadurch gekennzeichnet ist, dass**
besagter Parameter und der mit dem Parameter verbundene Identifizierer eine restriktive Politik des Mischens der Kommunikationsströme bestimmen, die zwischen der teilnehmenden Kommunikationseinheit, deren Identifizierer mit dem Parameter verbunden ist, und der dritten Kommunikationseinheit, ausgetauscht werden, wonach kein von der teilnehmenden Kommunikationseinheit ausgegebener Kommunikationsfluss von der dritten Kommunikationseinheit empfangen wird und kein von der dritten Kommunikationseinheit ausgegebener Kommunikationsfluss von der teilnehmenden Kommunikationseinheit empfangen wird, und wobei besagte Politik von der Host-Kommunikationseinheit angewandt wird.

7. Host-Kommunikationseinheit in Kommunikation mit mindestens einer teilnehmenden Kommunikationseinheit und dazu bestimmt, den Zugriff auf besagte Kommunikation von einer dritten Kommunikationseinheit über ein Paketnetzwerk (RP) zu verwalten, das die Mittel (UAS) zum Empfangen einer Nachricht (MI) umfasst, die durch die dritte Kommunikationseinheit übertragen wird, wobei die Nachricht mindestens einen Parameter (PM) umfasst, der verbunden ist mit dem Identifizierer einer teilnehmenden Kommunikationseinheit, und **dadurch gekennzeichnet ist, dass** sie die Mittel (UAS) umfasst zur Anwendung einer restriktiven Politik des Mischens der Kommunikationsströme, die zwischen der teilnehmenden Kommunikationseinheit, deren Identifizierer mit dem Parameter verbunden ist, und der dritten Kommunikationseinheit, ausgetauscht werden, wonach kein von der teilnehmenden Kommunikationseinheit ausgegebener Kommunikationsfluss von der dritten Kommunikationseinheit empfangen wird und kein von der dritten Kommunikationseinheit ausgegebener Kommunikationsfluss von der teilnehmenden Kommunikationseinheit empfangen wird, und wobei besagte Politik von dem Parameter und dem mit dem Parameter verbundenen Identifizierer bestimmt wird.

8. System zum Verwalten des Zugriffs auf eine Kommunikation, die zwischen einer Host-Kommunikationseinheit und mindestens einer teilnehmenden Kommunikationseinheit über ein Paketnetzwerk (RP) hergestellt wird, umfassend die Mittel (UAC) zum Übertragen einer Nachricht (MI) von der dritten Kommunikationseinheit an die Host-Kommunikationseinheit, wobei die Nachricht mindestens einen Parameter (PM) umfasst, der verbunden ist mit dem Identifizierer einer teilnehmenden Kommunikationseinheit, und **dadurch gekennzeichnet, dass** es die Mittel (UAS) zur Anwendung einer restriktiven Politik des Mischens der Kommunikationsströme umfasst, die zwischen der teilnehmenden Kommunikationseinheit, deren Identifizierer mit dem Parameter verbunden ist, und der dritten Kommunikationseinheit ausgetauscht werden, wonach kein von der teilnehmenden Kommunikationseinheit ausgegebener Kommunikationsfluss von der dritten Kommunikationseinheit empfangen wird und kein von der dritten Kommunikationseinheit ausgegebener Kommunikationsfluss von der teilnehmenden Kommunikationseinheit empfangen wird, wobei besagte Politik bestimmt wird von dem Parameter und dem mit dem Parameter verbundenen Identifizierer.

## Claims

1. A method for accessing, from a third-party communicating entity, a communication managed by a host communicating entity and established between the host communicating entity and at least one participating communicating entity via a packet network (RP) comprising the following steps:
a transmission (E2) of a message (MI) from the third-party communicating entity to the host communicating entity, the message comprising at least one parameter (PM) associated with an identifier of a participating communicating entity, and
**characterized in that** it comprises:
an application (E3) of a restrictive mixing policy for communication flows exchanged between the participating communicating entity whose identifier is associated with the parameter and the third-party communicating entity, whereby no communication flow emitted by the participating communicating entity is received by the third-party communicating entity and no communication flow emitted by the third-party communicating entity is received by the participating communicating entity, said policy being determined by the parameter and the identifier associated with the parameter.

2. A method according to claim 1, whereby the communication flows exchanged at the time of the communication comply with the SIP protocol.

3. A method according to one of the claims 1 and 2, whereby the message (MI) is an "INVITE" message according to the SIP protocol.

4. A method according to claim 3, whereby the parameter is included in a "Join" header within said message (MI).

5. A method according to one of the claims 1 to 4, whereby the participating communicating entity whose identifier is associated with said parameter is the host communicating entity.

6. A third-party communicating entity intended to access a communication managed by a host communicating entity and established between the host communicating entity and at least one participating communicating entity via a packet network (RP), comprising means (UAC) for transmitting a message (MI) to the host communicating entity, the message comprising at least one parameter (PM) associated with an identifier of a participating communicating entity, and **characterized in that**
said parameter and the identifier associated with the parameter determining a restrictive mixing policy for communication flows exchanged between the participating communicating entity whose identifier is associated with the parameter and the third-party communicating entity, a policy whereby no communication flow emitted by the participating communicating entity is received by the third-party communicating entity and no communication flow emitted by the third-party communicating entity is received by the participating communicating entity, said policy being applied by the host communicating entity.

7. A host communicating entity in communication with at least one participating communicating entity and intended to manage access to said communication from a third-party communicating entity via a packet network (RP) comprising means (UAS) to receive a message (MI) transmitted by the third-party communicating entity, the message comprising at least one parameter (PM) associated with an identifier of a participating communicating entity, and **characterized in that** it comprises means (UAS) for applying a restrictive mixing policy for communication flows exchanged between the participating communicating entity whose identifier is associated with the parameter and the third-party communicating entity, a policy whereby no communication flow emitted by the participating communicating entity is received by the third-party communicating entity and no communication flow emitted by the third-party communicating entity is received by the participating communicating entity, said policy being determined by the parameter and the identifier associated with the parameter.

8. A system for managing access to a communication established between a host communicating entity and at least one participating communicating entity from a third-party communicating entity via a packet network (RP) comprising means (UAC) to transmit a message (MI) from the third-party communicating entity to the host communicating entity, the message comprising at least one parameter (PM) associated with an identifier of a participating communicating entity, and **characterized in that** it comprises means (UAS) for applying a restrictive mixing policy for communication flows exchanged between the participating communicating entity whose identifier is associated with the parameter and the third-party communicating entity, a policy whereby no communication flow emitted by the participating communicating entity is received by the third-party communicating entity and no communication flow emitted by the third-party communicating entity is received by the participating communicating entity, said policy being determined by the parameter and the identifier associated with the parameter.
